# EUROPEAN PATENT APPLICATION

(11) **EP 1 962 130 A2**
(43) Date of publication of application: **27.08.2008**
(21) Application number: 07123670.7
(22) Date of filing: 19.12.2007
(51) Int. Cl.: G02F 1/13357, G02B 26/08

(54) **Image Display Apparatus and Method of Adjusting Brightness Thereof**

(30) Priority: 26.02.2007 KR 20070018993
(71) Applicant: Samsung Electronics Co., Ltd., Suwon-si, Gyeonggi-Do (KR)
(72) Inventor: Cho, Hyun-seung, Dongan-gu, Anyang-si, Gyeonggi-do (KR)
(74) Representative: Grünecker, Kinkeldey, Stockmair & Schwanhäusser Anwaltssozietät

(57) **Abstract**

An image display apparatus and a method of adjusting brightness are provided. The image display apparatus includes a display panel unit which displays an image, a digital micromirror device (DMD) panel unit which reflects incident light using a plurality of DMDs to the display panel unit to provide a backlight of the display panel unit According to the present invention, a backlight of the display panel is provided by reflecting incident light onto the display panel using the plurality of DMDs so that the image display apparatus and a method of adjusting brightness thereof which improve a contrast ratio are provided.

## Description

### BACKGROUND OF THE INVENTION

### 1. Field of the Invention

Apparatuses and methods consistent with the present invention relate to image display and brightness adjustment in displaying an image, and more particularly, to an image display apparatus which provides a backlight of a display panel using a digital micromirror device (DMD) and a method of adjusting brightness thereof.

### 2. Description of the Related Art

A general image display apparatus is used to display an image on a monitor of display apparatuses such as televisions (TV), notebooks, and desktop computers. A liquid crystal display (LCD) device does not emit light itself but uses light emitted from a light source. Accordingly, the LCD device includes a backlight device which forms a light source at the back side of a liquid crystal panel, and displays an image by adjusting transmittance of the light which is emitted from the backlight device.

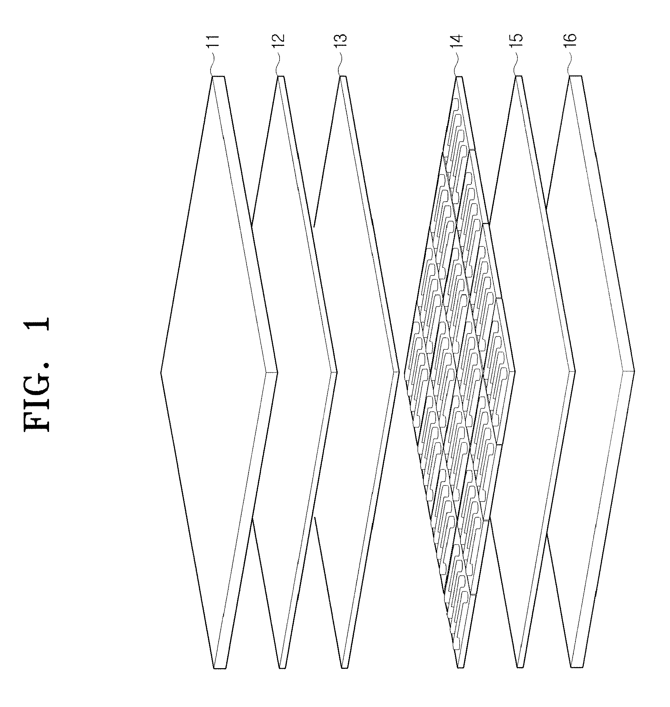

FIG. 1 is a view illustrating a related art backlight device. Referring to FIG. 1, the backlight device may comprise a liquid crystal panel 11 which displays an image by adjusting projected light, an optical sheet 12 which increases luminance by concentrating the light at bottom of the liquid crystal panel 11 at regular intervals, and a diffusing plate 13 which equally diffuses the light over the entire surface of the optical sheet 12. A plurality of divided lamps 14 which emits the light, a reflecting plate 15 which reduces loss of the light and increases light effect by causing the rear-headed light to turn towards the front and a case 16 which supports the above components are provided at the bottom of the diffusing plate 13, at the bottom of the divided lamps 14, and at the bottom of the reflecting plate 15, respectively.

The backlight device of FIG. 1 uses lamps which are divided in a block unit to increase a contrast ratio of a liquid crystal display device. Driving circuits are also provided in a block unit to drive the divided lamps such that brightness of the lamps is adjusted in a block unit. As the driving circuits become more complicated and the more blocks are used, the number of driving circuits increases. Furthermore, because the lamps are divided in a block unit, the number of the required lamps is limited such that a less dynamic and natural image is represented.

### SUMMARY OF THE INVENTION

Exemplary embodiments of the present invention address the above disadvantages and other disadvantages not described above. The present invention is not required to overcome the disadvantages described above, and an exemplary embodiment of the present invention may not overcome any of the problems described above.

The present invention provides an image display apparatus which reflects incident light using a plurality of DMDs onto a display panel unit, and provides a backlight of the display panel unit such that a contrast ratio is improved, and a method of adjusting brightness thereof.

According to an aspect of the present invention, there is provided an image display apparatus comprising a display panel unit which displays an image; and a digital micromirror device (DMD) panel unit which reflects incident light using a plurality of DMDs to the display panel unit, and provides a backlight of the display panel unit.

The image display apparatus may further comprise an image processing unit which processes an image signal which is inputted, and transmits the processed image signal to the DMD panel unit.

The DMD panel unit may turn on/off the plurality of DMDs on the basis of the image signal outputted from the image processing unit, and provide the backlight of the display panel unit.

The incident light which enters the DMD panel unit may be a white light.

The plurality of DMDs of the DMD panel may be provided to the DMD panel, corresponding to the number of pixels of the display panel unit.

The DMD panel unit may provide the backlight of the display panel unit by turning on/off the plurality of DMDs corresponding to the image displayed on the display panel unit.

According to another aspect of the present invention, there is provided a method of adjusting brightness comprising displaying an image; and reflecting incident light using a plurality of DMDs to a display panel unit, and providing a backlight of the display panel unit.

The reflecting may be executed on the basis of an image signal which is the same signal used in the displaying.

The reflecting may provide the backlight of the display panel unit by turning on/off the plurality of DMDs on the basis of the image signal.

The incident light may be a white light.

The plurality of DMDs may be provided corresponding to the number of pixels of the display panel unit.

The reflecting and providing may be provide the backlight of the display panel unit by turning on/off the plurality of DMDs corresponding to the image displayed on the display panel unit.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 is a view of a related art backlight apparatus;

FIG. 2 is a view illustrating an image display apparatus according to an exemplary embodiment of the present invention;

FIG. 3 is a view illustrating components of an image display apparatus according to an exemplary embodiment of the present invention;

FIG. 4 is a block diagram illustrating the image display apparatus of the FIG. 3, according to an exemplary embodiment of the present invention; and

FIG. 5 is a flowchart illustrating a process of adjusting brightness of an image display apparatus according to an exemplary embodiment of the present invention.

### DETAILED DESCRIPTION OF THE EXEMPLARY EMBODIMENTS

Certain exemplary embodiments of the present invention will now be described in greater detail with reference to the accompanying drawings.

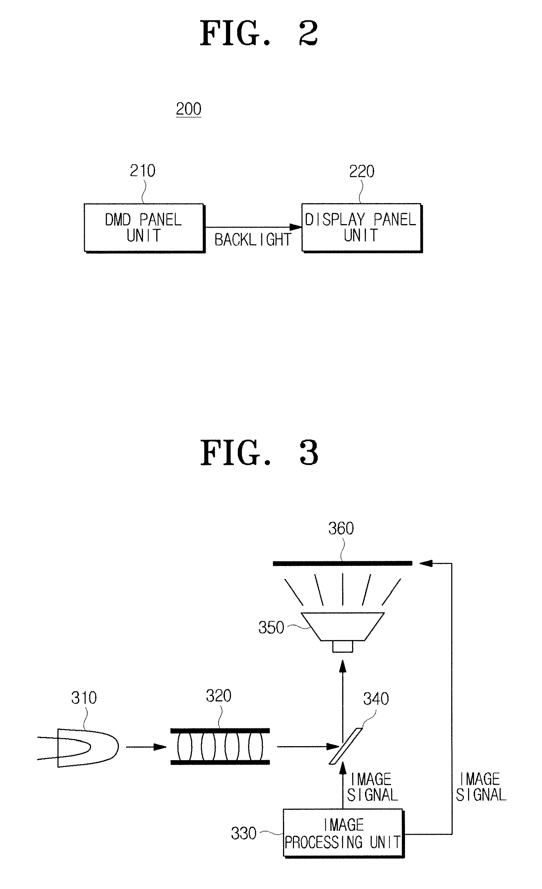

FIG. 2 is a view approximately illustrating an image display apparatus 200 according to an exemplary embodiment of the present invention. The image display apparatus 200 may comprise a digital micromirror device (DMD) panel unit 210 and a display panel unit 220.

The display panel unit 220 displays an image, and the DMD panel unit 210 reflects incident light using a plurality of DMDs onto the display panel unit 220, and provides a backlight of the display panel unit 220.

The DMD is a semiconductor chip which is used in a digital light processing (DLP) TV. The DMD is implemented to reflect the incident light by deflecting a micromirror according to two on/off electric signals, and is driven in a pulse width modulation (PWM) method.

FIG. 3 is a view illustrating components of an image display apparatus according to an exemplary embodiment of the present invention. Light emitted from a lamp 310 enters a DMD panel 340 through a condensing lens 320. The condensing lens 320 may be a relay lens, and the light passing the condensing lens 320 directly enters the DMD panel 340 without passing the color wheel.

The DMD panel 340 receives an image signal which is processed at an image processing unit 330, and turns on/off the plurality of DMDs of the DMD panel 340, to adjust the reflection amount of the light which has passed through the condensing lens 320. The image signal to be processed at the image processing unit 330 is transmitted to a display panel unit 360. The display panel unit 360 may be a liquid crystal panel. A color image is displayed on the image display apparatus as respective pixels of the display panel unit 360 are controlled according to the image signal which is transmitted to the display panel unit 360.

If the DMD panel 340 adjusts the reflection of the light using the plurality of DMDs, and reflects the incident light, a projection lens 350 projects the reflected light onto the display panel unit 360. Accordingly, a backlight is provided, corresponding to the image displayed on the display panel unit 360.

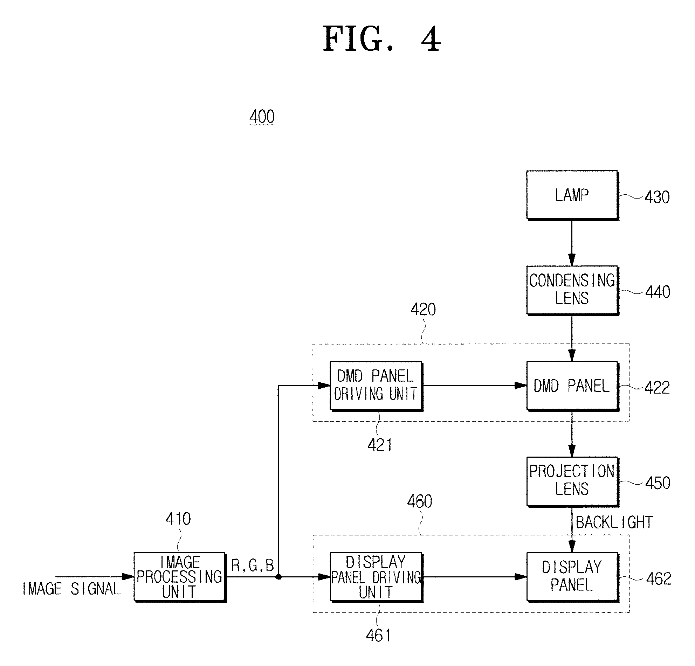

FIG. 4 is a block diagram illustrating the image display apparatus of the FIG. 3. Referring to FIG. 4, an image display apparatus 400 may comprise an image processing unit 410, a DMD panel unit 420, a lamp 430, a condensing lens 440, a projection lens 450, and a display panel unit 460.

The image processing unit 410 processes an image signal which is inputted, and transmits the processed image signal to the DMD panel unit 420 and the display panel unit 460. The DMD panel unit 420 and the display panel unit 460 receive and drive the same image signal.

A DMD panel driving unit 421 of the DMD panel unit 420 formats the image signal which is received from the image processing unit 410 into a suitable signal for driving a DMD panel 422, and drives the DMD panel 422.

That is, the DMD panel driving unit 421 formats R, G, B signals outputted form the image processing unit 410 into a PWM sequence signal, and drives the DMD panel 422 by tuning on/off the plurality of DMDs of the DMD panel 422.

Light emitted from the lamp 430 enters the DMD panel 422 through the condensing lens 440. Unlike a general digital liquid crystal (DLP) television, light condensed at the condensing lens 440 directly enters the DMD panel 422 without passing a color wheel. Accordingly, the light which enters the DMD panel 422 is white light which is emitted from the lamp 430. Since a color wheel is not required to use the light reflected from the panel 422 as the backlight of the display panel unit 462, a color wheel is unnecessary and can be eliminated from the components of the image display apparatus 400.

The DMD panel 422 adjusts the reflection amount of the light passing through the condensing lens 440 by tuning on/off the plurality of DMDs according to driving of the DMD panel driving unit 421. Light reflected from the DMD panel 422 may be represented as a gray scale image with 256 intensity values.

The plurality of DMDs of the DMD panel 422 are provided to the DMD panel 422 such that the DMDs respectively correspond to a predetermined number of pixels of the display panel unit 462. For example, if the resolution of a display panel is 1920 × 1040 of full HD, a panel having the same number of DMDs as the number of pixels of a display panel may be used in the DMD panel.

An effect to improve a contrast ratio is not impeded even with a DMD panel having a lower resolution than the display panel. Accordingly, a DMD panel having a lower resolution than the display panel may also be used. The plurality of DMDs of the DMD panel 422 correspond to a predetermined number of pixels of the display panel unit 462.

The backlight, which corresponds to the image displayed on the display panel unit 462, may be provided, by turning on/off the plurality of DMDs according to a driving signal of the DMD panel driving unit 421.

That is, if a part of image displayed on the display panel unit 462 is a bright image, an image reflected from the DMD panel 422 is represented as a black-and-white image. Accordingly, an effect of the related art backlight device which is obtained by driving panels in a block unit is achieved without requiring a plurality of lamps and an additional driving circuit.

When the DMD panel 422 reflects the incident light, with adjusting the reflection amount of light using the plurality of DMDs, the projection lens 450 projects the reflected light to the display panel unit 462. Accordingly, the backlight is provided to the display panel unit 462.

The display panel unit 462 is controlled such that the display panel driving unit 461 displays a color image. A signal processed at the image processing unit 410 is inputted to the display panel driving unit 461, and an image is displayed to the display panel unit 462 by a driving method of the general related art LCD device.

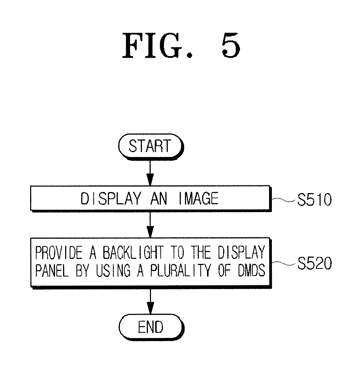

FIG. 5 is a flowchart illustrating a process of adjusting brightness of an image display apparatus according to an exemplary embodiment of the present invention. Referring to FIG. 5, an image is displayed (S510). In the same manner as in a related art LCD display, a signal processed at the image processing unit 410 is transmitted to the display panel driving unit 461 and the display panel unit 462 is driven such that the image is displayed on the display panel unit 462.

A backlight is provided to the display panel by using a plurality of DMDs (S520). The plurality of DMDs correspond to the number of the display panels. If the reflection amount of the light is adjusted by turning on/off the plurality of DMDs according to an image signal, and a backlight is provided to the display panel unit 462, the backlight may also be separately driven according to the image displayed on the display panel unit 462. A related art backlight device has a limitation in the number of blocks as it uses a way of dividing lamps by a block unit. The limitation of the related art backlight device is resolved, by using a DMD panel having the plurality of DMDs.

According to an exemplary embodiment of the present invention, the backlight of the display panel is provided by reflecting incident light onto the display panel using the plurality of DMDs so that an image display apparatus and a method of adjusting brightness thereof which improve a contrast ratio are provided.

According to the exemplary embodiment of the present invention, a contrast ratio is improved without requiring a plurality of lamps or driving circuits such that a cost of manufacture is reduced.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. An image display apparatus comprising:
a display panel unit which displays an image; and
a digital micromirror device (DMD) panel unit which reflects incident light using a plurality of DMDs to the display panel unit to provide a backlight of the display panel unit.

2. The image display apparatus of claim 1, further comprising an image processing unit which processes an image signal which is inputted to the image display apparatus, and transmits the processed image signal to the DMD panel unit.

3. The image display apparatus of claim 2, wherein the DMD panel unit turns on/off the plurality of DMDs based on the image signal outputted from the image processing unit to provide the backlight of the display panel unit.

4. The image display apparatus of claim 1, wherein the incident light which enters the DMD panel unit is a white light.

5. The image display apparatus of claim 1, wherein the plurality of DMDs of the DMD panel are provided to the DMD panel, and the DMDs respectively correspond to a predetermined number of pixels of the display panel unit.

6. The image display apparatus of claim 5, wherein a total number of the DMDs is the same as a total number of the pixels of the display panel unit.

7. The image display apparatus of claim 1, wherein the DMD panel unit provides the backlight of the display panel unit by turning on/off the plurality of DMDs based on the image displayed on the display panel unit.

8. The image display apparatus of claim 1, wherein the DMD panel unit has a lower resolution than the display panel unit.

9. A method of adjusting brightness of an image display apparatus, the method comprising:
displaying an image on a display panel unit; and
reflecting incident light using a plurality of DMDs to the display panel unit to provide a backlight of the display panel unit.

10. The method of claim 9, wherein the reflecting is performed based on an image signal which is a same signal used in the displaying.

11. The method of claim 10, wherein the reflecting provides the backlight of the display panel unit by turning on/off the plurality of DMDs based on the image signal.

12. The method of claim 9, wherein the incident light is a white light.

13. The method of claim 9, wherein the plurality of DMDs respectively correspond to a predetermined number of pixels of the display panel unit.

14. The method of claim 13, wherein a total number of the DMDs is the same as a total number of pixels of the display panel unit.

15. The method of claim 9, the reflecting provides the backlight of the display panel unit by turning on/off the plurality of DMDs based on the image displayed on the display panel unit.
